# EUROPÄISCHE PATENTSCHRIFT

(11) **EP 3 050 838 B1**
(45) Veröffentlichungstag und Bekanntmachung des Hinweises auf die Patenterteilung: **01.03.2017**
(21) Anmeldenummer: 16151690.1
(22) Anmeldetag: 18.01.2016
(51) Int. Cl.: B66F 9/075, B66F 9/12, B62B 3/06

(54) **GABELTRÄGER FÜR EIN FLURFÖRDERZEUG**
FORK CARRIER FOR AN INDUSTRIAL TRUCK
PORTE-FOURCHE POUR UN CHARIOT DE MANUTENTION

(30) Priorität: 29.01.2015 DE 102015101340
(43) Veröffentlichungstag der Anmeldung: 03.08.2016
(73) Patentinhaber: Jungheinrich Aktiengesellschaft, 22047 Hamburg (DE)
(72) Erfinder: Schüler, Michael, 23923 Schönberg (DE)
(74) Vertreter: Hauck Patentanwaltspartnerschaft mbB

(56) Entgegenhaltungen:
- DE-A1- 10 221 312
- DE-A1-102011 015 936
- DE-U1- 29 615 483

## Beschreibung

Die vorliegende Erfindung betrifft einen Gabelträger für ein Flurförderzeug. Der Gabelträger ist Bestandteil des Lastrahmens eines Flurförderzeugs. An dem Gabelträger sind die Gabelzinken befestigt, auf denen die Last angehoben und transportiert werden kann. Der Gabelträger ist mittels einer Linearführung, beispielsweise mit einem Hubmastprofil im Antriebsrahmen und Rollen an dem Gabelträger vertikal in dem Antriebsrahmen des Fahrzeugs gelagert. Durch einen oder mehrere Hubzylinder wird die Höhenposition des Gabelträgers bestimmt und eine Last angehoben oder abgesenkt. Der Gabelträger ist für das Lastteil des Flurförderzeugs ein wesentliches Rahmenstrukturteil, das entsprechend der Nutzlast und den Einsatzbedingungen für das Flurförderzeug ausgelegt ist.

Bekannte Gabelträger besitzen zusätzlich eingesetzte Gurte oder Streben, mit denen dem Gabelträger die notwendige Steifigkeit und Stabilität verliehen wird. Die Verwendung von zusätzlichen Gurten oder Streben in dem Gabelträger stellt einen hohen Materialeinsatz dar, der zu hohen Materialkosten und einem hohen Gewicht für das Fahrzeug führt. Im Übrigen ist auch der Zusammenbau des Gabelträgers durch eine zusätzliche Gurte- oder Strebenstruktur aufwendig und zeitintensiv.

DE 102 21 312A1 offenbart einen Rahmen für das Antriebsteil eines Flurförderzeugs, insbesondere eines Hubwagens, der u.a. als Träger einer Hubvorrichtung dient und aus flachen Blechzuschnitten geformte Bauteile aufweist.

DE 296 15 483 U1 offenbart ein kastenförmiges Gehäuseteil für ein Flurförderzeug, das abgekantete Blechzuschnitte aufweist.

Der Erfindung liegt die Aufgabe zugrunde, einen Gabelträger für ein Flurförderzeug bereitzustellen, der bei gleichbleibender Stabilität und Steifigkeit weniger Material besitzt und leicht zusammenbaubar ist.

Die erfindungsgemäße Aufgabe wird durch einen Gabelträger mit den Merkmalen aus Anspruch 1 gelöst. Vorteilhafte Ausgestaltungen bilden den Gegenstand der Unteransprüche.

Der erfindungsgemäße Gabelträger ist vorgesehen und bestimmt für ein Flurförderzeug mit anhebbaren Lastgabeln. Der erfindungsgemäße Gabelträger weist ein lastseitiges Hauptblech, ein gabelseitiges Hauptblech und ein fahrerseitiges Hauptblech auf. Die Hauptbleche sind zu einem kastenförmigen Gabelträgerkörper mit sechs Flachseiten verbunden. Die erfindungsgemäße Ausgestaltung des Gabelträgerkörpers ergibt sich aus der Form der Hauptbleche. Das gabelseitige Hauptblech besitzt zwei Verbindungsanschlüsse für zwei Gabelzinken. Das lastseitige Hauptblech besitzt seitlich zwei abgekantete Seitenlaschen, an denen jeweils eine Kinematikschnittstelle angeordnet ist. Die Kinematikschnittstellen sind dafür vorgesehen, dass der Gabelträger relativ zu einem Mastprofil bewegt werden kann. Das erfindungsgemäß vorgesehene fahrerseitige Hauptblech besitzt eine abgekantete Abdecklasche. Die miteinander verbundenen Hauptbleche besitzen einen kastenförmigen Körper, an dem das gabelseitige und das lastseitige Hauptblech fünf Seiten des Gabelträgerkörpers bilden und die sechste Seite im Wesentlichen von dem gabelseitigen Hauptblech gebildet ist. Ein wichtiger Aspekt an dem kastenförmigen Gabelträger ist, dass dieser aus der Form und der Verbindung der Hauptbleche seine Steifigkeit und Stabilität zieht und zusätzliche Versteifungs- und Verbindungseinrichtungen unterbleiben können.

In einer bevorzugten Ausgestaltung sind die einen kastenförmigen Hohlkörper bildenden Hauptbleche derart ausgebildet, dass der Gabelträger seine Steifigkeit und Stabilität aus diesen bezieht. Die Ausbildung der Hauptbleche bezieht sich hierbei beispielsweise auf deren Wandstärke, deren Form und Verbindung miteinander. Durch die Verbindung der Hauptbleche miteinander entsteht der kastenförmige Hohlkörper, der ausreichend stabil ist und den Gabelträger bildet.

In einer weiteren bevorzugten Ausgestaltung weist jede Kinematikschnittstelle ein Paar von Rollenbolzen auf, die jeweils eine in einem Mastprofil geführte Rolle lagern können. Grundsätzlich sind auch andere Kinematikschnittstellen, wie beispielsweise in Form von Hebeln. Gleitkörpern oder dergleichen möglich. Ebenso kann die Kinematikschnittstelle auch an dem Gabelträger eine Profilschiene vorsehen, die auf hubmastseitigen Rollen geführt ist.

In einer bevorzugten Ausgestaltung des erfindungsgemäßen Gabelträgers besitzt das fahrerseitige Hauptblech eine Durchbrechung zu einem in dem Gabelträger angeordneten Hubzylinderraum. Der Hubzylinderraum ist vorgesehen, um in einem montierten Zustand des Gabelträgers den Hubzylinder zum Anheben und Absenken des Gabelträgers aufzunehmen.

In einer weiteren bevorzugten Ausgestaltung ist das fahrerseitige Hauptblech mit einer Hubzylinderlasche ausgestattet, die in Richtung der Abdecklasche abgekantet ist.

Die Hubzylinderlasche ist von dem fahrerseitigen Hauptblech abgekantet und bildet eine Seitenwand des Hubzylinderraums, der im Inneren des Gabelträgers gebildet ist.

In einer weiter bevorzugten Ausgestaltung ist eine Hubzylinderlasche vorgesehen, die in Richtung der Abdecklasche abgekantet ist. Die Hubzylinderlasche bildet eine Seitenwand des Hubzylinderraums.

Bevorzugt ist ein weiteres Hubzylinderblech vorgesehen, das eine L-Form besitzt und mit der Hubzylinderlasche gemeinsam den Hubzylinderraum begrenzt. Hubzylinderblech sowie Hubzylinderlasche begrenzen den Hubzylinderraum an drei Seiten, wobei das Hubzylinderblech auch als Anschlagfläche für eine Kolbenstange des Hubzylinders dient.

In einer weiter bevorzugten Ausgestaltung besitzt das lastseitige Hauptblech eine abgekantete Bodenlasche, die in Richtung der Seitenlaschen abgekantet ist. Die abgekantete Bodenlasche wirkt mit dem gabelseitigen Hauptblech zusammen, um eine ausreichende Abstützung für die Gabelzinken zu erzielen. Zur besseren Verbindung mit dem fahrerseitigen Hauptblech besitzt die Bodenlasche an ihrem freien Ende mindestens einen Vorsprung. Der mindestens eine Vorsprung ist mit dem fahrerseitigen Hauptblech verbunden, um eine steifere Verbindung für die Verbindungsanschlüsse des gabelseitigen Hauptblechs zu schaffen. Auch erleichtert der mindestens eine Vorsprung die Fertigung, indem sich die Hauptbleche leichter in einer definierten Stellung zusammensetzen lassen.

In einer bevorzugten Ausgestaltung ist das gabelseitige Hauptblech mit einer U-förmigen Kontur ausgebildet, wobei ein Schenkel mit dem lastseitigen Hauptblech und der andere Schenkel mit dem fahrerseitigen Hauptblech verbunden sind. Bevorzugt ist dabei die Bodenlasche des lastseitigen Hauptblechs mit dem Schenkel des gabelseitigen Hauptblechs verbunden, der mit dem fahrerseitigen Hauptblech verbunden ist. Die Bodenlasche des lastseitigen Hauptblechs zusammen mit dem gabelseitigen Hauptblech bildet eine geschlossene Form, die ausreichend stabil zur Aufnahme und Befestigung der Gabelzinken ist.

Das lastseitige Hauptblech besitzt auf seiner lastseitigen Flachseite einen zwischen den Seitenlaschen sich erstreckenden Absatz. Der Absatz dient zur Konturierung des lastseitigen Hauptblechs und kann mit der Hubzylinderlasche und dem Hubzylinderblech zusammenwirken.

Der erfindungsgemäße Gabelträger verzichtet auf Versteifungsstreben und -gurte, wodurch Gewicht, Anzahl der verbauten Teile und Herstellungskosten eingespart werden.

Eine bevorzugte Ausgestaltung des Gabelträgers wird für ein Flurförderzeug nachfolgend beschrieben. Es zeigen:
- Fig. 1: einen Gabelstapler mit Standplattform in einer perspektivischen Ansicht von vorne,
- Fig. 2: den Gabelstapler in einer Ansicht von der Seite,
- Fig. 3: den Gabelstapler aus Fig. 1 in einer Ansicht von vorne mit transparent dargestelltem Gabelträger,
- Fig. 4: den transparent dargestellten Gabelträger aus Fig. 4 von der Lastseite,
- Fig. 5: den transparent dargestellten Gabelträger aus Fig. 4 von der Fahrerseite,
- Fig. 6: den Gabelträger von der Fahrerseite,
- Fig. 7: den Gabelträger von der Lastseite,
- Fig. 8: den Gabelträger in einer Explosionsansicht,
- Fig. 9: den Gabelträger in einer lastseitigen Ansicht,
- Fig. 10: den Gabelträger in einem Schnitt entlang der Linie A-A aus Fig. 6,
- Fig. 11: den Gabelträger aus Fig. 9 entlang einem Schnitt der Linie B-B,
- Fig. 12: den Gabelträger mit angesetzten Gabelzinken,
- Fig. 13: den Gabelträger mit angesetzten Zinken in einer Draufsicht,
- Fig. 14: den Gabelträger aus Fig. 13 entlang einem Schnitt A-A,
- Fig. 15: den Gabelträger entlang einem Schnitt der Linie B-B,
- Fig. 16: den Gabelträger in einer perspektivischen Ansicht mit einem Blick auf die Gabelzinken und deren Anbindung,
- Fig. 17: einen Gabelträger mit Gabelzinken in einer Ausgestaltung nach Stand der Technik,
- Fig. 18: den Gabelträger aus Fig. 17 in einer lastseitigen Ansicht und
- Fig. 19: den Gabelträger aus Fig. 17 in einer fahrerseitigen Ansicht.

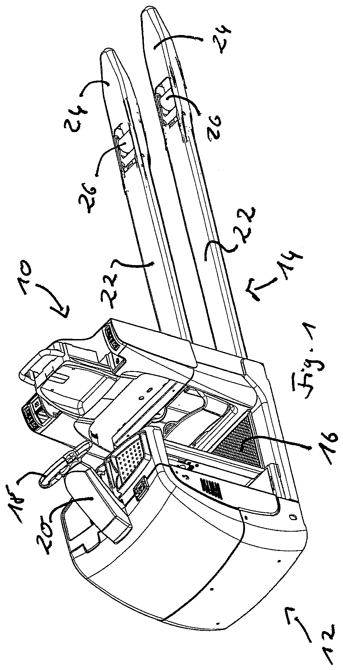

Fig. 1 zeigt einen Gabelstapler 10 mit einem Antriebsteil 12 und einem Lastteil 14. Das Antriebsteil 12 besitzt eine Standplattform 16, von der aus ein Lenkrad 18 mit Bedienelementen über eine Kurzdeichsel 20 zugänglich ist. Das Lastteil 14 besitzt zwei Gabelzinken 22, die im Bereich ihrer Spitze 24 über Lastrollen 26 verfügen.

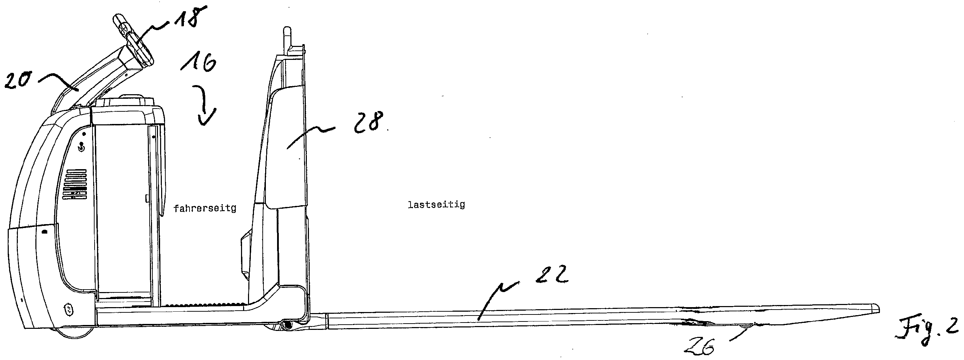

Fig. 2 zeigt den Gabelstapler 10 aus Fig. 1 in einer Ansicht von der Seite. Die Gabelzinken 22 sind entlang der Rückwand 28 des Standplatzes 16 in der Höhe verstellbar.

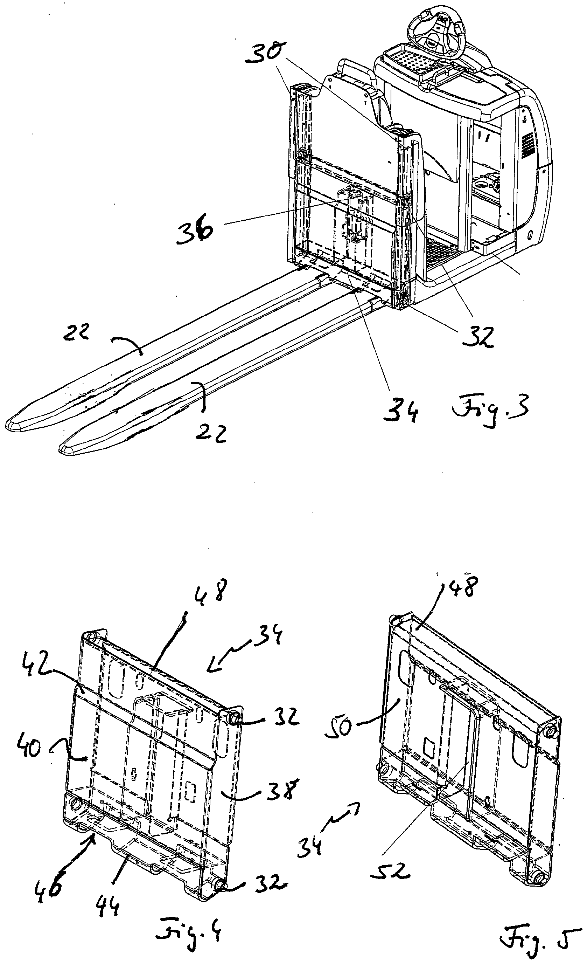

Fig. 3 zeigt den näheren Aufbau zu der Höhenverstellung. Demnach sind in der Rückwand 28 zwei Hubschienen 30 vorgesehen, in denen jeweils ein Paar von Mastrollenbolzen 32 läuft. Die Mastrollenbolzen sind seitlich an einem Gabelträger 34 angeordnet, an dem auch die Gabelzinken 22 befestigt sind. Über einen Hubzylinder 36 wird der Gabelträger 34 angehoben. Der Hubzylinder 36 stützt sich an dem Rahmen des Antriebsteils ab und hebt bzw. senkt den Gabelträger entlang der Hubschienen 30.

Fign. 4 und 5 zeigen einen kastenförmigen Gabelträger 34 in einer transparenten Ansicht, einmal von der Fahrerseite in Fig. 5 und einmal von der Lastseite in Fig. 4. In Fig. 4 sind die Seitenlaschen 38 mit den Hubmastrollenbolzen 32 zu erkennen. Die Hubmastrollenbolzen 32 sind an gegenüberliegenden Enden der Seitenlaschen 38 angeordnet. Die Seitenlaschen sind abgekantet von dem lastseitigen Hauptblech 40, das in Fig. 4 als vorderes Hauptblech zu erkennen ist. Das lastseitige Hauptblech 40 besitzt einen Absatz 42, der sich zwischen den Seitenlaschen 38 erstreckt.

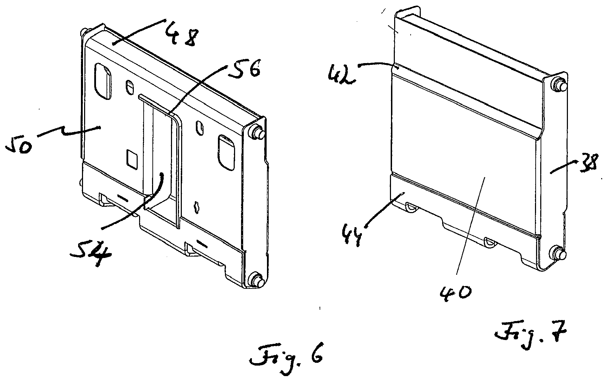

Das gabelseitige Hauptblech 44 ist am unteren Ende des Gabelträgers 34 angeordnet. In den Fign. 4 und 5 sind mit den jeweiligen Ausnehmungen die Verbindungsanschlüsse 46 für die Gabelanschlüsse zu erkennen. In den Fign. 4 und 5 ist ebenfalls die Abdecklasche 48 dargestellt, die von einem fahrerseitigen Hauptblech 50 abgekantet ist. Der Aufbau des Hubzylinderraums 52 ist in Fig. 6 gezeigt. Fig. 6 ist eine Ansicht aus Fig. 5 mit dem fahrerseitigen Hauptblech 50, das eine Hubzylinderlasche 54 aufweist. Die Hubzylinderlasche 54 und die Abdecklasche 48 sind hierbei in gleicher Richtung an dem fahrerseitigen Hauptblech 50 abgekantet. In Fig. 6 ebenfalls zu erkennen, ist das L-förmige Hubzylinderblech 56, das zusammen mit der Hubzylinderlasche 54 von drei Seiten den Hubzylinderraum begrenzt.

Fig. 7 zeigt den Gabelträger 34 in seiner lastseitigen Ansicht mit seinem lastseitigen Hauptblech 40, das einen Absatz 42 aufweist. Auch ist das gabelseitige Hauptblech 44 zu erkennen. Die Ansicht aus Fig. 7 entspricht der transparenten Darstellung aus Fig. 4. In Fig. 7 zeigt ferner, dass die Seitenlasche 38 mit dem gabelseitigen Hauptblech 44 abschließt.

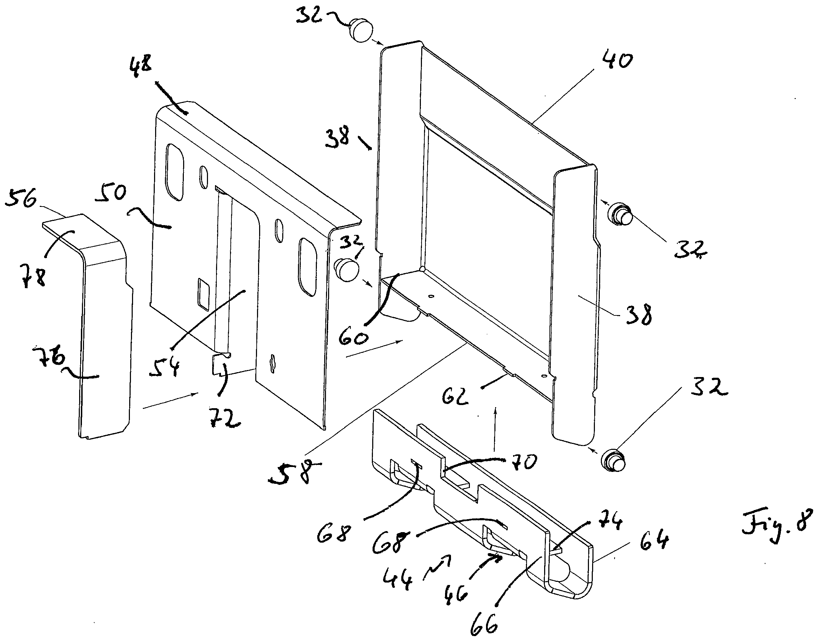

Fig. 8 zeigt den erfindungsgemäßen Gabelträger 34 in einer Explosionsdarstellung. Dargestellt ist das lastseitige Hauptblech 40 mit seinen Seitenlaschen 38. Ferner ist eine in Fahrzeuglängsrichtung sich erstreckende Bodenlasche 58 vorgesehen. Die Bodenlasche 58 ist in der gleichen Richtung abgekantet wie die Seitenlaschen 38 und ist entlang der Verbindungsnaht 60 mit den Seitenlaschen 38 verbunden, beispielsweise verschweißt. An die Seitenlaschen 38 sind die Hubmastrollenbolzen 32 oder deren Bolzen angesetzt. Die Hubmastrollenbolzen 32 sind eine mögliche Ausgestaltung für eine Kinematikschnittstelle, mit der der Gabelträger höhenverstellbar gelagert ist.

Die Bodenlasche 58 besitzt an ihrem freien Ende zwei Vorsprünge 62.

Fig. 8 zeigt ferner das gabelseitige Hauptblech 44 mit seinen Schenkeln 64 und 66. Der Schenkel 64 ist als lastseitiger Schenkel ausgebildet, während der Schenkel 66 der fahrerseitige Schenkel bildet. Insgesamt besitzt das gabelseitige Hauptblech 44 eine ungefähr U-förmige Struktur, wobei Fig. 8 bereits zeigt, dass der fahrerseitige Schenkel 66 höher ausgebildet ist, als der lastseitige Schenkel 64.

Fig. 8 zeigt in dem fahrerseitigen Schenkel 66 zwei Schlitze 68, die im montierten Zustand für die Vorsprünge 62 ausgebildet sind. An dem fahrerseitigen Schenkel 66 ist zudem mittig eine Ausnehmung 70 vorgesehen, in die ein unterer Abschnitt 72 der Hubzylinderlasche 54 vorsteht.

In Fig. 8 ist ferner zu erkennen, dass in den Verbindungsanschlüssen 46 eine nach innen vorstehende Verbindungslasche 74 angeordnet ist.

Fig. 8 zeigt ferner das fahrerseitige Hauptblech 50 mit seiner Abdecklasche 48. Im Bereich einer Durchbrechung 76 steht die Hubzylinderlasche 54 vor. Ergänzt wird die Hubzylinderlasche 54 durch das Hubzylinderblech 56, das einen Seitenabschnitt 76 und einen Kopfabschnitt 78 besitzt. Der Seitenabschnitt 76 bildet zusammen mit der Hubzylinderlasche 54 die seitlichen Begrenzungen für den Hubzylinderraum 52. Der Kopfabschnitt 78 des Hubzylinderblechs 56 dient als Anschlag für den Hubzylinder, um den Gabelträger anzuheben und abzusenken.

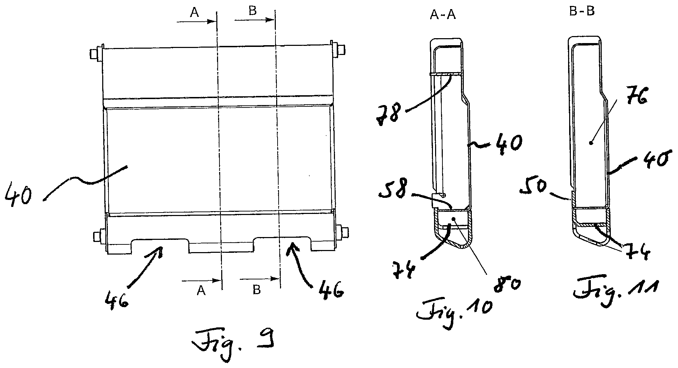

Fig. 9 zeigt den zusammengesetzten Gabelträger in einer Ansicht auf das lastseitige Hauptblech 40. Fig. 10 zeigt den Schnitt entlang der Linie A-A durch den Gabelträger. Der Schnitt A-A liegt mittig, so dass zwischen den Verbindungsanschlüssen 46 mittig durch den Hubzylinderraum 52 geschnitten wird. In Fig. 10 zu erkennen ist der Kopfabschnitt 78 des Hubzylinderblechs 56. Gegenüberliegend zu dem Kopfabschnitt 78 ist die Bodenlasche 58 des lastseitigen Hauptblechs 40 zu erkennen. Ebenfalls ist in Fig. 10 die Verbindungslasche 74 dargestellt, die tiefer als die Bodenlasche 58 liegt, so dass sich hier ein Hohlraum 80 in dem Gabelträger bildet.

Wie in Fig. 11 dargestellt, ist die Verbindungslasche 74 an ihrem freien Ende mit dem lastseitigen Hauptblech 40 verbunden. An ihrem gegenüberliegenden Ende ist die Verbindungslasche 74 von dem fahrerseitigen Hauptblech abgekantet.

Der oberhalb der Bodenlasche 58 sichtbare Bereich ist der von außerhalb des Hubzylinderraums gesehene Seitenabschnitt 76 des Hubzylinderblechs 56 oder alternativ die Hubzylinderlasche 54 von außerhalb des Hubzylinderraums.

Die Schnittdarstellungen aus Fign. 10 und 11 zeigen deutlich, dass durch die Verbindung zwischen lastseitigem und fahrerseitigem Hauptblech der gesamte Gabelträger eine ausreichend steife und belastbare Form bekommt.

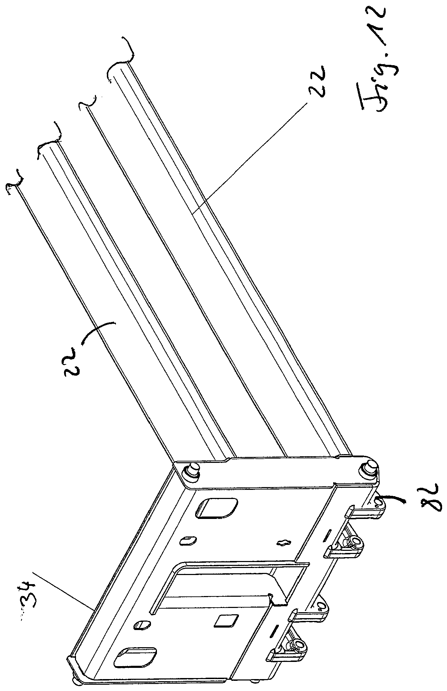

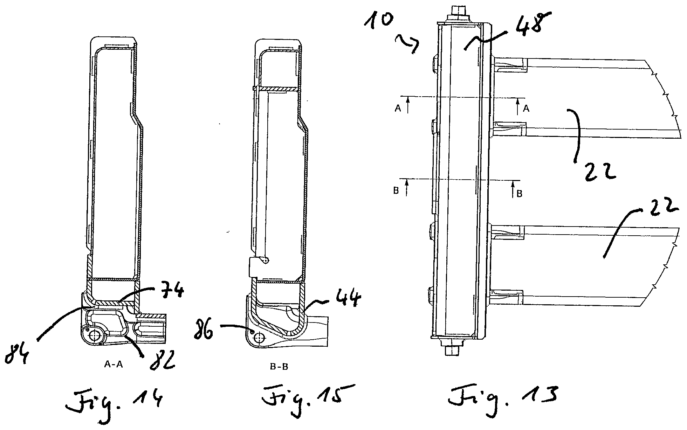

Fig. 12 zeigt den Gabelträger 34 zusammen mit den Gabelzinken 22, die mit ihrem Anschlussadapter 82 mit den Verbindungsanschlüssen 46 verbunden sind. Fig. 13 zeigt eine Draufsicht auf den Gabelträger 34 mit seiner Abdecklasche 48 und angesetzten Gabelzinken 22.

Fig. 14 zeigt den Schnitt entlang der Linie A-A aus Fig. 13 mittig durch die Gabelzinke 22. Deutlich zu erkennen ist, dass die Verbindungslasche 74 des gabelseitigen Hauptblechs 44 auf einer angepassten Anlagefläche 84 des Anschlussadapters 82 ruht. In Fig. 15 ist zu erkennen, wie die Kontur des gabelseitigen Hauptblechs 44 mit einem Anschlussadapter verbunden ist.

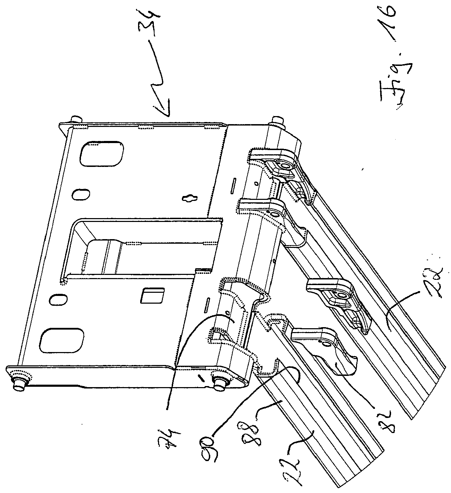

Fig. 16 zeigt in einer teilweisen Explosionsdarstellung die Anbindung der Gabelzinken 22 an den Gabelträger 34. Jede der Gabelzinken 22 besteht aus einem Zinkenkörper 88, der zumindest im Bereich des Gabelträgers ein U-förmiges Profil aufweist, bei dem die Schenkelkanten 90 zueinander gebogen sind. Die Anbindung des Zinkenkörpers 88 erfolgt über den Anschlussadapter 82, der annähernd L-förmig ausgebildet ist. Der Anschlussadapter wird mit den Kanten des Verbindungsanschlusses 46 in dem gabelseitigen Hauptblech verschweißt. Zudem wird der Anschlussadapter mit dem Zinkenkörper 88 verschweißt. Zusätzliche Stabilität erhält der Anschluss über das Verschweißen mit der Verbindungslasche 74, die zudem an ihrem freien Ende mit den gegenüberliegenden Schenkeln des gabelseitigen Hauptblechs verschweißt ist. Über zwei Anschlussadapter 82 kann eine stabile Verbindung der Gabelzinke mit dem Gabelträger 34 erzielt werden.

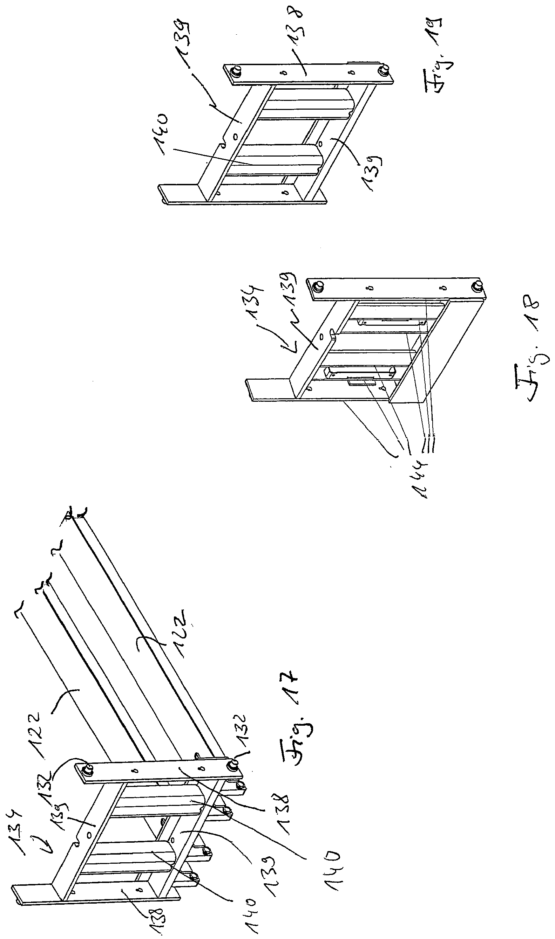

Die Figuren 17 bis 19 zeigen einen herkömmlichen Gabelträger 134 mit Gabelzinken 122 nach dem Stand der Technik. Der bekannte Gabelträger 134 besitzt zwei Seitenwände 138 mit jeweils zwei Hubmastrollenbolzen 132 an ihren Enden. Die Seitenwände 138 sind über zwei horizontale Querstreben 139 miteinander verbunden. Zwischen den Querstreben 139 sind zwei U-förmige Profile 140 gesetzt, die als Gurte oder vertikale Streben ausgebildet sind und dem Gabelträger 134 die erforderliche Steifigkeit und Stabilität verleihen. Der Gabelträger 134 wird fahrerseitig und lastseitig verkleidet, ohne dass die Verkleidung jedoch eine tragende Funktion besitzt.

Fig. 18 zeigt den Gabelträger 134 von der lastseitigen Ansicht mit den eingesetzten U-förmigen Profilen 140. Insgesamt entstehen sechs vertikal verlaufende Gurte 144, die den Gabelträger 134 über seine Querstreben 139 gegeneinander stabilisieren. Von den sechs Gurten werden vier Gurte durch die U-förmigen Profile 140 und zwei Gurte von den Seitenwänden 138 gebildet.

Fig. 19 zeigt den Gabelträger 134 in einer fahrerseitigen Ansicht, wobei die U-förmigen Profile 140 fahrerseitig geschlossen sind.

Mit dem erfindungsgemäßen Gabelträger werden durch die Verwendung eines kastenförmigen Hohlkörpers die vier Krafteinleitungspunkte der Hubrollenbolzen verbindungssteif und kraftflussgerecht bei minimalen Materialeinsatz miteinander verbunden.

Die Steifigkeit wird nicht durch beispielsweise vertikale Einzelstege oder -streben, sondern durch die Struktur des geschlossenen Kastens erreicht, wobei gleichzeitig mit größerer Einfachheit sowie geringem Teile- und Materialeinsatz die gleiche Wirkung erzielt wird. Der geschlossene Kasten ermöglicht eine gegenseitige Stützwirkung der einzelnen Hauptbleche, wodurch auch der Einsatz von dünnwandigen Blechstrukturen möglich ist.

### Bezugszeichenliste

- 10: Gabelstapler
- 12: Antrieb steil
- 14: Lastteil
- 16: Standplattform
- 18: Lenkrad
- 20: Kurzdeichsel
- 22: Gabelzinke
- 24: Gabelspitze
- 26: Lastrollen
- 28: Rückwand
- 30: Hubschienen
- 32: Hubmastrollenbolzen
- 34: Gabelträger
- 36: Hubzylinder
- 38: Seitenlaschen
- 40: lastseitiges Hauptblech
- 42: Absatz
- 44: gabelseitiges Hauptblech
- 46: Verbindungsanschluß
- 48: Abdecklasche
- 50: fahrerseitiges Hauptblech
- 52: Hubzylinderraum
- 54: Hubzylinderlasche
- 56: Hubzylinderblech
- 58: Bodenlasche
- 60: Verbindungsnaht
- 62: Vorsprung
- 64: lastseitiger Schenkel
- 66: fahrerseitiger Schenkel
- 68: Schlitz
- 70: Ausnehmung
- 72: Abschnitt
- 74: Verbindungslasche
- 76: Seitenabschnitt
- 78: Kopfabschnitt
- 80: Hohlraum
- 82: Anschlussadapter
- 84: Fläche
- 89: Zinkenkörper
- 90: Schenkelkanten
- 122: Gabelzinke
- 132: Hubmastrollenbolzen
- 134: Gabelträger
- 138: Seitenwand
- 139: Querstrebe
- 140: U-Profil
- 144: Gurte

## Patentansprüche

1. Gabelträger (34) für ein Flurförderzeug, der ein lastseitiges Hauptblech (40), ein gabelseitiges Hauptblech (44) und ein fahrerseitiges Hauptblech (50) aufweist, die zu einem kastenförmigen Gabelträgerkörper mit sechs Flachseiten verbunden sind, wobei
- das gabelseitige Hauptblech (44) zwei Verbindungsanschlüsse (46) für zwei Gabelzinken (22) aufweist,
- das lastseitige Hauptblech (40) seitlich zwei abgekantete Seitenlaschen (38) aufweist, an denen jeweils eine Kinematikschnittstelle (32) angeordnet ist und
- das fahrerseitige Hauptblech (50) eine abgekantete Abdecklasche (48) besitzt.

2. Gabelträger (34) nach Anspruch 1, **dadurch gekennzeichnet, dass** die einen kastenförmigen Hohlkörper bildenden Hauptbleche derart ausgebildet sind, dass der Gabelträger seine Steifigkeit und Stabilität aus diesen zieht.

3. Gabelträger (34) nach Anspruch 1 oder 2, **dadurch gekennzeichnet, dass** jede Kinematikschnittstelle ein Paar von Rollenbolzen (32) aufweist, die jeweils eine in einem Mastprofil geführte Rolle lagern können.

4. Gabelträger nach Anspruch 1 bis 3, **dadurch gekennzeichnet, dass** das fahrseitige Hauptblech (50) eine Durchbrechung zu einem in dem Gabelträger (34) angeordneten Hubzylinderraum (52) aufweist.

5. Gabelträger nach Anspruch 4, **dadurch gekennzeichnet, dass** das fahrerseitige Hauptblech (50) eine Hubzylinderlasche (54) aufweist, die in Richtung der Abdecklasche (48) abgekantet ist.

6. Gabelträger nach Anspruch 5, **dadurch gekennzeichnet, dass** ein Hubzylinderblech (56) vorgesehen ist, dass eine L-Form besitzt und mit der Hubzylinderlasche (54) gemeinsam den Hubzylinderraum (52) begrenzt.

7. Gabelträger nach einem der Ansprüche 1 bis 6, **dadurch gekennzeichnet, dass** das lastseitige Hauptblech (40) eine gekantete Bodenlasche (58) besitzt, die in Richtung der Seitenlaschen (38) abgekantet ist.

8. Gabelträger nach Anspruch 7, **dadurch gekennzeichnet, dass** die Bodenlasche (58) an ihrem freien Ende mindestens einen Vorsprung (62) besitzt.

9. Gabelträger nach einem der Ansprüche 1 bis 8, **dadurch gekennzeichnet, dass** das gabelseitige Hauptblech (44) eine U-förmige Kontur besitzt, wobei ein Schenkel mit dem lastseitigen Hauptblech (40) und der andere Schenkel mit dem fahrerseitigen Hauptblech (50) verbunden ist.

10. Gabelträger nach Anspruch 8 und 9, **dadurch gekennzeichnet, dass** die Bodenlasche (58) des lastseitigen Hauptblechs (40) mit dem Schenkel des gabelseitigen Hauptblechs (44) verbunden ist, der mit dem fahrerseitigen Hauptblech (50) verbunden ist.

11. Gabelträger nach einem der Ansprüche 1 bis 10, **dadurch gekennzeichnet, dass** das lastseitige Hauptblech (40) auf seiner lastseitigen Flachseite einen zwischen den Seitenlaschen sich erstreckenden Absatz (42) besitzt.

12. Gabelträger nach einem der Ansprüche 1 bis 11, **dadurch gekennzeichnet, dass** Keine Versteifungsstreben in dem Gabelträger (34)angeordnet sind.

## Claims

1. Fork carriage (34) for an industrial truck, which has a load-side main metal sheet (40), a fork-side main metal sheet (44) and a driver-side main metal sheet (50), which are connected to a box-shaped fork carriage body with six flat sides, wherein
- the fork-side main metal sheet (44) has two connecting connections (46) for two fork prongs (22),
- the load-side main metal sheet (40) has laterally two folded side plates (38), on each of which a kinematics interface (32) is arranged and
- the driver-side main metal sheet (50) has a folded cover plate (48).

2. Fork carriage (34) according to claim 1, **characterized in that** the main metal sheets forming a box-shaped hollow body are designed such that the fork carriage gets it rigidity and stability from them.

3. Fork carriage (34) according to claim 1 or 2, **characterized in that** each kinematics interface has a pair of roller bolts (32), each of which can mount a roller guided in a mast profile.

4. Fork carriage according to claims 1 to 3, **characterized in that** the driver-side main metal sheet (50) has a through hole to a lift cylinder space (52) arranged in the fork carriage (34).

5. Fork carriage according to claim 4, **characterized in that** the driver-side main metal sheet (50) has a lift cylinder plate (54), which is folded in the direction of the cover plate (48).

6. Fork carriage according to claim 5, **characterized in that** a lift cylinder metal sheet (56) is provided that has an L shape and delimits the lift cylinder space (52) together with the lift cylinder plate (54).

7. Fork carriage according to one of claims 1 to 6, **characterized in that** the load-side main metal sheet (40) has a tilted floor plate (58), which is folded in the direction of the side plates (38).

8. Fork carriage according to claim 7, **characterized in that** the floor plate (58) has at least one projection (62) on its free end.

9. Fork carriage according to one of claims 1 to 8, **characterized in that** the fork-side main metal sheet (44) has a U-shaped contour, wherein one arm is connected with the load-side main metal sheet (40) and the other arm with the driver-side main metal sheet (50).

10. Fork carriage according to claims 8 and 9, **characterized in that** the floor plate (58) of the load-side main metal sheet (40) is connected with the arm of the fork-side main metal sheet (44), which is connected with the driver-side main metal sheet (50).

11. Fork carriage according to one of claims 1 to 10, **characterized in that** the load-side main metal sheet (40) has a ledge (42) extending between the side plates on its load-side flat side.

12. Fork carriage according to one of claims 1 to 11, **characterized in that** no reinforcing struts are arranged in the fork carriage (34).

## Revendications

1. Porte-fourche (34) pour un chariot de manutention qui présente une tôle principale côté charge (40), une tôle principale côté fourche (44) et une tôle principale côté conducteur (50) qui sont reliées pour former un corps de porte-fourche en forme de boîte avec six côtés plats, dans lequel
- la tôle principale côté fourche (44) présente deux raccords de connexion (46) pour deux bras de fourche (22),
- la tôle principale côté charge (40) présente latéralement deux attaches latérales repliées (38) au niveau desquelles une interface cinématique (32) est à chaque fois disposée et
- la tôle principale côté conducteur (50) possède une attache de recouvrement repliée (48).

2. Porte-fourche (34) selon la revendication 1, **caractérisé en ce que** les tôles principales formant un corps creux en forme de boîte sont réalisées de telle sorte que le porte-fourche tire sa rigidité et stabilité de celles-ci.

3. Porte-fourche (34) selon la revendication 1 ou 2, **caractérisé en ce que** chaque interface cinématique présente une paire de goujons à galet (32) qui peuvent chacun héberger un galet guidé dans un profil de poteau.

4. Porte-fourche selon les revendications 1 à 3, **caractérisé en ce que** la tôle principale côté conducteur (50) présente un orifice traversant vers un espace de vérin hydraulique (52) disposé dans le porte-fourche (34).

5. Porte-fourche selon la revendication 4, **caractérisé en ce que** la tôle principale côté conducteur (50) présente une attache de vérin hydraulique (54) qui est repliée en direction de l'attache de recouvrement (48).

6. Porte-fourche selon la revendication 5, **caractérisé en ce qu'**une tôle de vérin hydraulique (56) est prévue qui possède une forme en L et limite avec l'attache de vérin hydraulique (54) l'espace de vérin hydraulique (52).

7. Porte-fourche selon une des revendications 1 à 6, **caractérisé en ce que** la tôle principale côté charge (40) possède une attache de fond repliée (58) qui est repliée en direction des attaches latérales (38).

8. Porte-fourche selon la revendication 7, **caractérisé en ce que** l'attache de fond (58) possède à son extrémité libre au moins une saillie (62).

9. Porte-fourche selon une des revendications 1 à 8, **caractérisé en ce que** la tôle principale côté fourche (44) possède un contour en forme de U, dans lequel une branche est reliée à la tôle principale côté charge (40) et l'autre branche à la tôle principale côté conducteur (50).

10. Porte-fourche selon les revendications 8 et 9, **caractérisé en ce que** l'attache de fond (58) de la tôle principale côté charge (40) est reliée à la branche de la tôle principale côté fourche (44) qui est reliée à la tôle principale côté conducteur (50).

11. Porte-fourche selon une des revendications 1 à 10, **caractérisé en ce que** la tôle principale côté charge (40) possède sur son côté plat côté charge un épaulement (42) s'étendant entre les attaches latérales.

12. Porte-fourche selon une des revendications 1 à 11, **caractérisé en ce qu'**aucun étai de renfort n'est disposé dans le porte-fourche (34).
